# EUROPEAN PATENT APPLICATION

(11) **EP 1 739 572 A1**
(43) Date of publication of application: **03.01.2007**
(21) Application number: 05014344.5
(22) Date of filing: 01.07.2005
(51) Int. Cl.: G06F 17/21

(54) **A method of generating a graphical manual**

(71) Applicant: Bayerische Motoren Werke Aktiengesellschaft, 80809 München (DE)
(72) Inventor: Stock, Ingo, 80337 München (DE)

(57) **Abstract**

In a method of generating a graphical manual for the manipulation of at least one component contained in a device, a plurality of components are each assigned metadata containing
- manipulation data containing information which is necessary for a manipulation of the component in at least one manipulation mode and
- visualization data containing information which is necessary for a visualization of the component in a plurality of positions,

for a desired manipulation mode of an individual component a motion sequence of at least the individual component is generated from the manipulation data and the generated motion sequence is visualized based on the visualization data.

## Description

The invention relates to a method of generating a graphical manual for the manipulation of at least one component contained in a device.

As modern technical products like cars, airplanes or production facilities become more and more complex, the technical documentation of such products becomes more comprehensive, too. Often several alternatives of a product are brought to market at the same time. According to the state of the art, most manuals cannot be reused for each derivative even though most of the products of a type series mainly consist of non-variable parts. The term *manual* is to be understood as comprising any kind of technical documentation in this context.

Furthermore, new technologies like Virtual Reality and Augmented Reality are increasingly used to visualize repair or operating manuals. The availability of a suitable authoring environment is a prerequisite for the applicability of technical documentation based on these new technologies.

Important kinds of technical documentation are operating instructions (instruction manuals) and repair manuals. On the one hand technical documentation describes the function as well as the operation of a product, on the other hand it illustrates its construction. The creation process of technical documentation typically is very time-consuming. Providing technical documentation, particularly providing it as soon as possible, is an increasing expense factor for the manufacturer of a product. The high cost is mainly due to the fact that technical documentation is mainly created without sufficient computerized support. In order to make this process more cost-efficient, several approaches to provide computerized support have been attempted. However, known methods do not provide an easy solution leading to sufficient results.

Today the author of a manual has to verify the manual at a hardware prototype frequently during the creation process. A crucial prerequisite to this method is the availability of all required products. However, this cannot be assured at any time of the development phase. Due to the high cost of hardware prototypes as many steps as possible are ensured virtually (e.g. crash test simulations). However, the generation of such animations by known methods is very time-consuming as well.

Finally, the development time for new products becomes shorter. Thus, the creation of technical documentation has to be completed in shorter time, too.

It is an object of the present invention to increase the level of automation in the creation process of technical documentation.

The object of the present invention is accomplished by a method of generating a graphical manual for the manipulation of at least one component contained in a device, in which a plurality of components are each assigned metadata containing
- manipulation data containing information which is necessary for a manipulation of the component in at least one manipulation mode and
- visualization data containing information which is necessary for a visualization of the component in a plurality of positions,

in which for a desired manipulation mode of an individual component a motion sequence of at least the individual component is generated from the manipulation data and in which the generated motion sequence is visualized based on the visualization data.

The term *graphical manual* is to be understood as comprising any kind of technical documentation describing the functionality and/or construction of a device and including the visualization of at least one component of a device. Particularly, the term *graphical manual* is to be understood as comprising graphical instruction manuals as well as graphical repair manuals.

A concrete use case of the present invention is the generation of repair manuals for vehicles, particularly for the automotive industry.

A method according to the present invention allows for a fully or at least partly automated generation of graphical manuals. Thus, it remedies many deficiencies of the state of the art and enables new applications. The invention allows to provide graphical manuals easier and earlier, e. g. as soon as at the end of the design phase. Even production-supporting documentation (e. g. mounting guidelines) can be provided from the first product on. Furthermore, graphical manuals developed according to the present invention can be verified at a virtual prototype of the final product already in a very early phase of the development process.

According to known methods, changes made in the final product result in big additional effort, because the technical author has to revise many parts of a manual, which had already been approved. According to a preferred embodiment of the present invention, a computer application records all relevant changes to the product and corrects the concerned parts of the graphical manual. An easy and efficient method for the correction of a manual becomes more and more important while computer animations are increasingly used to visualize repair or operating instructions. A non-automated revision of these animations causes big effort and can be very time-consuming.

The inventive approach is generally based on a division of the generation of a graphical manual into several major partitions: the preparation of metadata, the generation of a motion sequence, and the visualization of this motion sequence.

First, the metadata is assumed to be available. Its preparation is discussed later in this document.

The first step towards the generation of the motion sequence is accomplished by the author. The author creates an abstract workflow for the manipulation of at least one component of a device. This workflow describes the necessary steps, which have to be carried out in order to cause a certain effect, to repair a car for instance. Each step in the workflow concerns the manipulation of an individual component in a certain manner, i. e. in a certain manipulation mode.

According to the present invention, the components involved in the workflow are each assigned metadata. The metadata of each component contains manipulation data. This manipulation data contains information which is necessary for a manipulation of the component in the desired manipulation mode.

According to a preferred embodiment of the present invention, the manipulation data of a component contains information on periphery elements which have to be manipulated in order to manipulate the component as well as information on the manipulation mode in which the periphery elements have to be manipulated. Periphery elements in the above sense can be further regular components and/or accessory parts, e. g. screws. In the following, accessory parts are also treated as components. If a manipulation of a component in a desired manipulation mode demands a manipulation of any periphery elements, the manipulation data describes which periphery elements have to be manipulated and how, i. e. in which manipulation mode, they have to be manipulated. According to this preferred embodiment of the present invention, the manipulation data of a component contains pointers (or links) to further components and/or their manipulation data.

If a manipulation of periphery elements is necessary in order to accomplish a step within the workflow, the corresponding step is split up into corresponding sub-steps. Such a subdivision of steps within the workflow can be continued hierarchically over any number of hierarchical levels and finally results in a workflow consisting of "atomic" actions only. Such atomic actions can not be split up any further.

Each atomic action is a manipulation of a single component in a certain manipulation mode. The manipulation data which refers to such an atomic action contains information on a motion sequence of the component when this component manipulated in the desired manipulation mode. Either a full description of this motion sequence is contained in the metadata as a kind of template or the metadata is suitable to serve as a basis for a determination of such a motion sequence.

Of course, the manipulation data of a component can comprise pointers to manipulations of periphery elements as well as one or several atomic actions to the component itself. According to a preferred embodiment of the invention, this heterogeneity is avoided by replacing an atomic action to the component itself by a pointer to a manipulation of a virtual periphery element which actually is an atomic action to the component itself.

Additionally, the manipulation data of a component, particularly the manipulation data of an accessory part, can contain information on at least one tool, which is necessary to manipulate the component.

Furthermore, the metadata of each component contains visualization data containing information which is necessary for a visualization of the component in a plurality of positions. Depending on the application the term *position* is to be understood as an absolute or relative position defined by 3 (translation only) or 6 (translation and rotation) degrees of freedom. Finally, the generated motion sequences of all components involved are visualized based on this visualization data and the generated motion sequence.

According to the above description, the invention allows for a fully automated visualization of the abstract workflow defined by the author. The automated visualization can easily be achieved by use of state-of-the-art computer hardware. The inventive approach enables a computer system to generate and maintain manuals or parts of those automatically. The invention supports an intuitive creation process supervised by the technical author. Additionally, a part of the quality assurance of a product can be taken on via predefined structures and workflows.

A crucial prerequisite to the automated generation is the availability of adequate metadata. Essentially, metadata is structured data about any object. So metadata is data associated with objects, which relieves their potential users of having full advance knowledge of their existence or characteristics. The applications and meta-models within the field of metadata are introduced and discussed in Stephens, R. T., Utilizing Metadata as a Knowledge Communication Tool. In Proceedings of IEEE IPCC2004, Oct. 2004, USA, pp. 55-60*.*

This metadata contains further information describing the object and builds the basis for information storage and retrieval systems. The term metadata has become common with the popularity of the World Wide Web. But the concepts have been in use for as long as collections of information have been organized. Library catalogs represent a common usage of metadata. Typically metadata supports a number of functions: location, discovery, documentation, evaluation, selection and others. Human end-users or their automated agents may carry out these activities.

Today the term metadata is often used in connection with the World Wide Web. Metadata grants access to resources posted on the Internet at any time. The Dublin Core Metadata Set conduces to identify and to find objects easier and faster. The Dublin Core Meta Initiative (DCMI) develops metadata vocabularies for describing resources that enable more intelligent information discovery system. These vocabularies are domain independent and can be easily adapted to any application. A special relevance of metadata comes up with the distribution of resources over the Internet. Metadata is used to find any kind of objects or information by keywords. The W3C Semantic Web Activity focuses on defining standards and technologies that allow finding data on the Web (Berners-Lee, T., Miller, E. The Semantic Web lifts off. ERCIM News No. 51, Oct. 2002, pp. 9-11*).* One of these standard describing and representing information is the Resource Description Framework (RDF). RDF is a foundation for processing metadata and it provides interoperability between applications that exchange machine-understandable information on the Web.

The use of metadata is known from various technical fields, but is new with respect to the field of the invention. In the following, some technical fields, where the use of metadata is known are described. Definitely the oldest and most widespread fields using metadata are in cataloging for instance in a library setting. In this context, metadata helps to find a book. Generally you can say the key purpose of metadata is to improve the retrieval of information. A present-day project dealing with this application area is the SIMILE project. SIMILE seeks to enhance interoperability among digital assets, schemata, vocabularies, ontologies, metadata and services.

The authoring of metadata is a common challenge. The framework CREAM deals with this issue and allows for creation of metadata *(*Handschuh, S., Staab, S., Authoring and Annotation of Web Pages in CREAM. In Proceedings of ACM WWW '02, 2002, Honolulu/Hawaii, USA, pp. 462-473). Yet another application field is video editing. Many research projects are investigating how to search, visualize and summarize digital video. One of these projects is SILVER. Its aim is to simplify video editing by using metadata. While video editing is very difficult and tedious, novice users can perform these tasks assisted by the SILVER smart editing *(*Casares, J., Long, A.C., Myers, B.A., Bhatnager, R., Stevens, S.M., Dabbish, L., Yocum, D., Corbett, A. Simplifying Video Editing Using Metadata. In Proceedings of ACM DIS 2002, 2002, London/England, pp. 157-166).

The creation and editing process of Mixed Reality (including Virtual and Augmented Reality) based scenarios becomes more and more important. Mixed Reality is an appropriate technology to visualize assembly and disassembly processes. In Zauner, J., Haller, M., Brandl, A., Hartmann, W. Authoring of a Mixed Reality Assembly Instructor for Hierarchical Structures. In Proceedings of ISMAR 2003, Sept. 2002, Tokyo/Japan, pp. 237-246 a Mixed Reality based manual and an authoring tool are introduced and discussed. This approach shows an authoring process where any step of the scenario has to be created by hand. Making this task easier is introduced in Knoepfle, Ch., Weidenhausen, J., Chauvigné L., Stock, I. Template based Authoring for AR based Service Scenarios. In Proceedings of IEEE VR 2005, Mar. 2005, Bonn/ Germany, pp. 249-252. Template based authoring helps to reduce the development time of animations. The basic idea is the standardized generating of technical documentation by predefined templates. In this context the creation of Augmented Reality based repair manuals is described. Metadata can be defined as design-engineering information. This information results from the product development and supports the technical author or a suitable computer system in generating the documentation and the associated visualization.

In contrast to known methods, e. g. the Authoring Wizard introduced in Zauner, J., Haller, M., Brandl, A., Hartmann, W. Authoring of a Mixed Reality Assembly Instructor for Hierarchical Structures. In Proceedings of ISMAR 2003, Sept. 2002, Tokyo/Japan, pp. 237-246*,* the inventive approach is to simplify the authoring process by reusing engineering and design data for the creation of technical documentations. In turn this metadata could be used as parameters for predefined animation templates.

Further information, details, and preferred embodiments of the present invention are disclosed by the figures and the following explanations. For better understanding, some major facts and drawbacks of the state of the art are recapitulated together with the explanation of the present invention. The figures show:
- Fig. 1:: A repair manual based on text and illustrations.
- Fig. 2:: Example of an operating instruction.
- Fig. 3.: An animated repair instruction.
- Fig. 4:: An Augmented Reality scenario.
- Fig. 5:: Metadata assigned to a single component.
- Fig. 6:: Metadata concerning a geometry of a component.
- Fig. 7:: Metadata concerning a position of a component.
- Fig. 8:: Metadata concerning a periphery of a component.
- Fig. 9:: Metadata concerning a periphery element.
- Fig. 10:: Metadata concerning a tool assigned to a periphery element.
- Fig. 11:: Metadata concerning the dis-/assembly of a component.
- Fig. 12:: Metadata concerning a disassembly sequence.
- Fig. 13:: Metadata concerning a way of disassembly.
- Fig. 14:: A workflow for a sample repair manual.
- Fig. 15:: Partial stages of the a repair step.

In the majority of cases today's technical documentation is based on textual information and illustrations. Textual information must be read and decoded by the user. The correct interpretation of the textual description and adequate three-dimensional imagination are required in order to carry out operations correctly. In the future these instructions could be visualized by using alternative technologies. Potential technologies are videos, animations, hypermedia, Virtual and Augmented Reality. They make it much easier to explain and, in particular, to understand the operation to be done. The shown action becomes an additional information carrier.

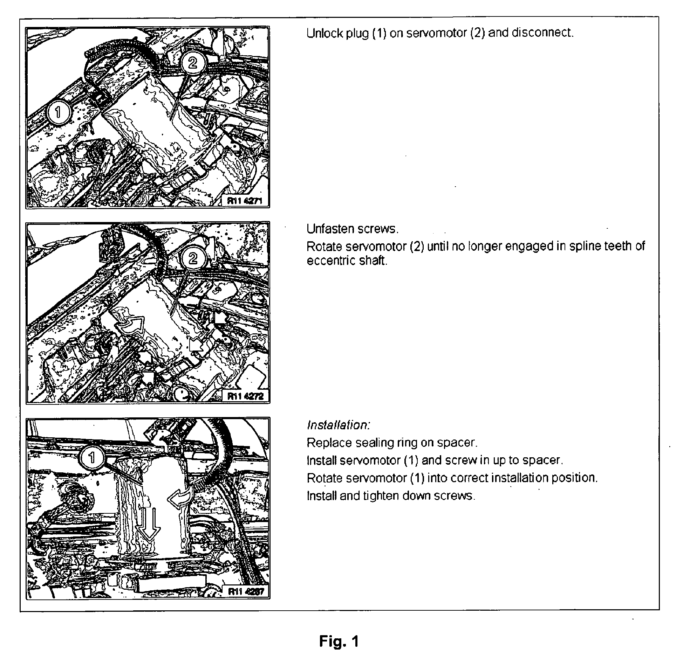

Technical documentation according to the state of the art often looks like the sample repair manual in Fig. 1. On the left hand side, illustrations augmented by arrows and numbers are depicted. These numbers are correlated with the textual information on the right hand side.

To support the work of the author of a repair manual, the author first needs to know, in which order the several parts have to be dismantled. Usually, all accessory parts (and possibly other components) connected to a component have to be released first. Afterwards, the component itself can be dismounted. According to the present invention, such component-describing information is considered as metadata. Metadata corresponding to Fig. 1 has to specify, that first of all the plug has to be unlocked and disconnected. Metadata corresponding to the second step has to contain information about the fastening of the servomotor, which is supposed to be dismantled. Additionally an indication is provided about the way the servomotor has to be removed. The third illustration and the related text in Fig. 1 contain installation information.

The textual information mainly depends on the knowledge and experience of the technical author. This information is not stored outside the manual in a structured way. So an adequate computerized support is not efficiently realizable.

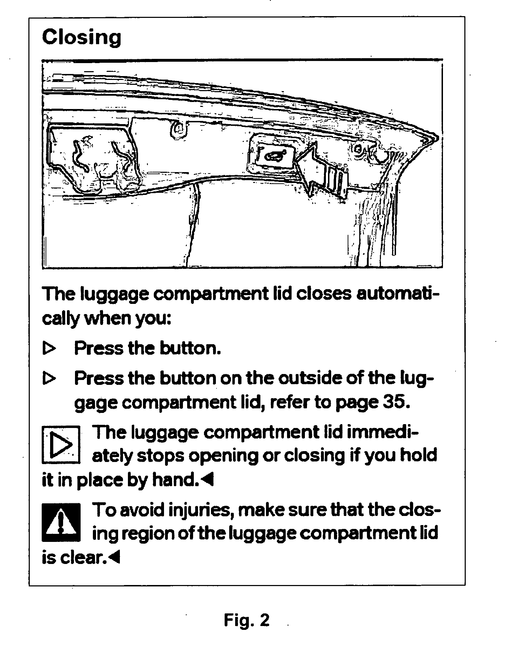

Another example for a technical manual is an operating instruction manual. Fig. 2 shows the handling of a button closing an automatic luggage compartment lid. As can be seen in Fig. 2, information on the function of the button has added by the author. Furthermore, there is a safety warning pointing out a danger for the customer during the operation.

In the following, it is assumed, that any information used in operating manuals can be assigned to one out of three characteristic types. These types are functional descriptions, behavior guidelines and safety warnings.

Safety warnings like shown in Fig. 2 are ought to prevent accidents. In any case a component could cause injuries a corresponding warning has to be provided in the manual. Missing warnings can cause accidents and claims for indemnification against the manufacturer. In order to assure that a warning is published in the manual, the warnings are recorded as metadata nearby a component. So every time this component occurs the computer system creates an adequate warning. This makes sure that all necessary warnings are included in the manual.

In a method according to the present invention, every car component is designed as a CAD-model within the development phase of a car. So the whole car is available virtually and the totality of virtual components is called *Virtual Car.* The use of the Virtual Car is state of the art. At this stage the development and the manufacturing department assure their processes with the Virtual Car (e.g. crash test simulations, assembly and disassembly tests). It includes engineering and design data. Especially the graphical representation of the product components is an important base to establish new technologies in technical documentations.

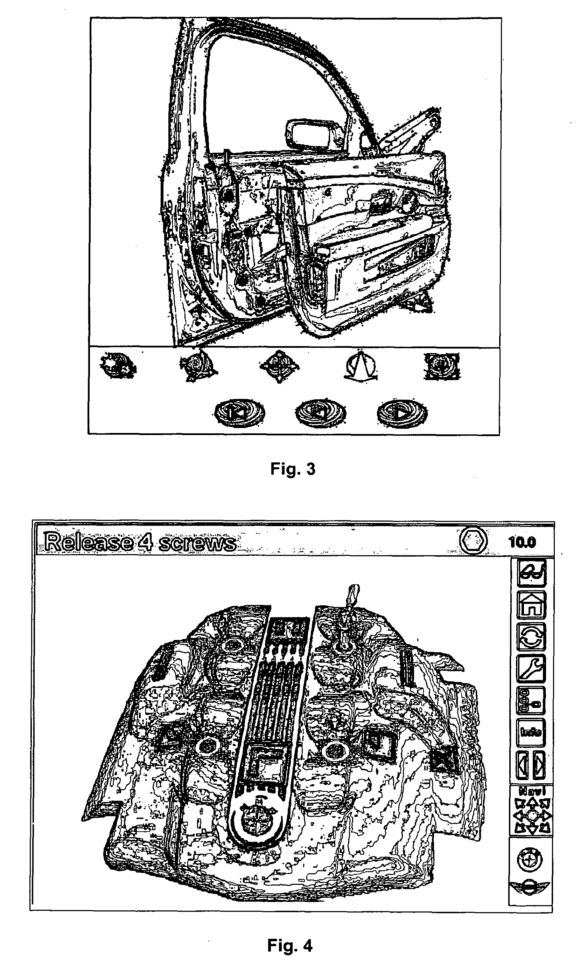

Fig. 3 shows an extract from an interactive repair manual which is a result of a preferred embodiment of the present invention.

Virtual Reality based manuals require high performance hardware. Especially the graphic equipment of a computer system used for this purpose has to meet the demands of Virtual Reality. The user usually is enabled to change the point of view or hide components. Hence the computer has to render each frame at run-time. As an alternative, if no user-interaction is needed, a graphical manual can contain animations. Such animations are also based on the Virtual Car, but are rendered as films such that a state of the art workshop computer is able to play them.

The next stage is Augmented Reality (AR). This technology is classified as a new type of human machine interaction. The basic concept of AR is combining the reality with virtual objects. In the context of repair instructions these objects could be arrows, circles, screws, tools, etc. A common application domain for Augmented Reality is the service and maintenance of manufactured products. Augmented Reality is used to support service personnel in carrying out their tasks by displaying context-sensitive, additional and virtual information in their field of view. Fig. 4 shows a screenshot of a service scenario based on the ARVIKA system.

Today's authoring process requires a real product or at least an early prototype. The technical author has to analyze and, where appropriate, to dismantle this product to work out the operating manual or disassembly sequence step by step. On this basis, it is not possible to cover all alternatives and versions of a product. Furthermore this would not be economically justifiable. So there will always be a difference between the product the customer gets and the associated manual.

By known methods it is not feasible to generate a manual that is a one hundred percent match of a particular technical product. However, this is a prerequisite for manuals in the future, especially if these will be visualized using new technologies. In the case of Virtual Reality the user is still able to compensate for small differences between the shown animation and the reality. But in case of an immersive technology like Augmented Reality, which combines the real and the virtual world closely, no discrepancies are acceptable.

Particularly in the automotive industry, the variance between each produced car is very distinctive. The customer can order a unique car. So, in the worst case, no existing repair manual and/or operating instruction covers the whole car. Nevertheless, the manufacturer is in dept to provide adequate documentation.

These basic conditions demand for a new-designed authoring process for technical documentation. The inventive approach utilizes the engineering knowledge of the technical author. The technical author is to create a generic workflow fitting the whole type series and stores necessary metadata in a database. Based on this database a computer-supported process generates and visualizes car-specific repair manuals.

The basic concept of a metadata-based authoring method according to the present invention is the usage of information recorded during the whole design and development process of technical products. This information supports the technical author in generating and maintaining operating instructions or repair manuals etc. According to the state of the art, this information is embedded in textual descriptions, but it is not recorded systematically.

In the following, an overview of metadata recorded during the development phase is provided. The Resource Description Framework (RDF) is used for illustrating this metadata. The Resource Description Framework (RDF) has been introduced in Lassila, O., Swick, R. Resource Description Framework (RDF): Model and Syntax Specification. Recommendation, World Wide Web Consortium, 1999*.* The description is limited to showing an exemplary metadata set used for repair manuals of a car. This set can be adapted to any other product and any other kind of technical documentation easily.

First of all, every component of a car has to be identified uniquely by a component number. Via this component number it can be found out, in which products (in this case different cars) this component is installed. Often manufacturers reuse parts and whole subassemblies in several products. Then the metadata, which has been recorded once can be reused for all products. This is an important advantage of the present invention.

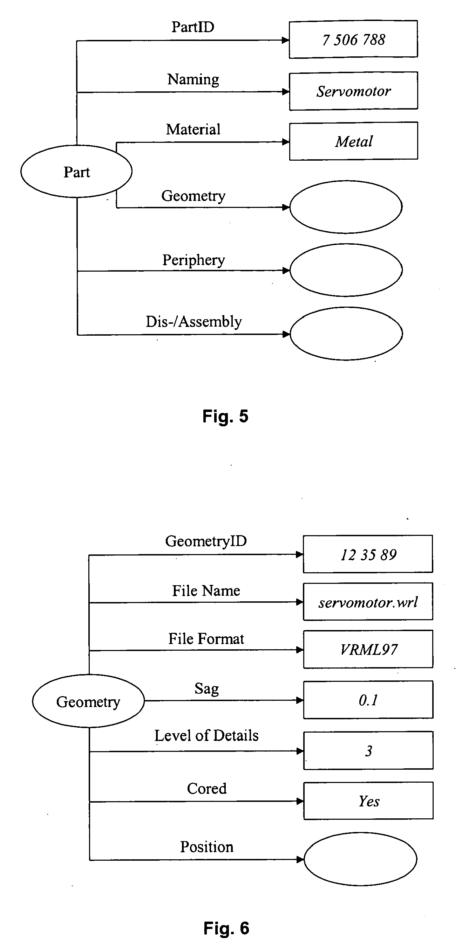

A component is assigned a standardized naming; mostly there are different names depending on the use case. Within a specific use case this assures that the same component always has the same naming. We presume the use case of a repair manual. If it is ought to cover multiple use cases in the same metadata model, namespaces for operating instructions, repair manuals, etc would have to be implemented. Fig. 5 shows an example of metadata assigned to a single component or part (the terms component and part are used equivalent within this example).

The metadata in Fig. 5 contains manipulation data and visualization data. Some metadata fields are both relevant to manipulation and visualization.

The material information contains visualization data, which is required in a visualization process. Often the CAD models are colored different from the reality. On the one hand this supports the design process to differentiate between the separate components of a product, on the other hand it is necessary to assign them a natural appearance in the repair manual. The material information can also be used to identify flexible parts like hoses and electrical wires. Furthermore, the material information allows drawing conclusions to the approximate weight of a component. This could be used to generate corresponding warnings during the dismounting process. The metadata fields "Geometry", "Periphery" and "Dis-/Assembly" contain information declared in the corresponding graphs explained below.

Fig. 6 shows an example of geometry metadata. When using technologies like Virtual Reality, a graphical representation of a component is necessary for its visualization. The geometry data includes the model itself (or a reference to a database containing the model) as well as additional information on this model. In many cases, not the whole CAD model is required, but an alternative model, which is already cored (all invisible shapes were removed), tessellated with a specified level of details (LOD) and a given sag value. If the generation of animations is also ought to be automated, animation paths have to be stored. These paths specify the motion sequence of the component during a dismounting process or a functional motion like pressing a button or opening a sunroof.

There are two essential kinds of motions: standard motions (like pressing a button or turning a screw upwards) and component specific motions like dismounting a cover along a particular animation path. These specific motions can often be reused from earlier development phases of the product, where virtual disassembly tests have already taken place.

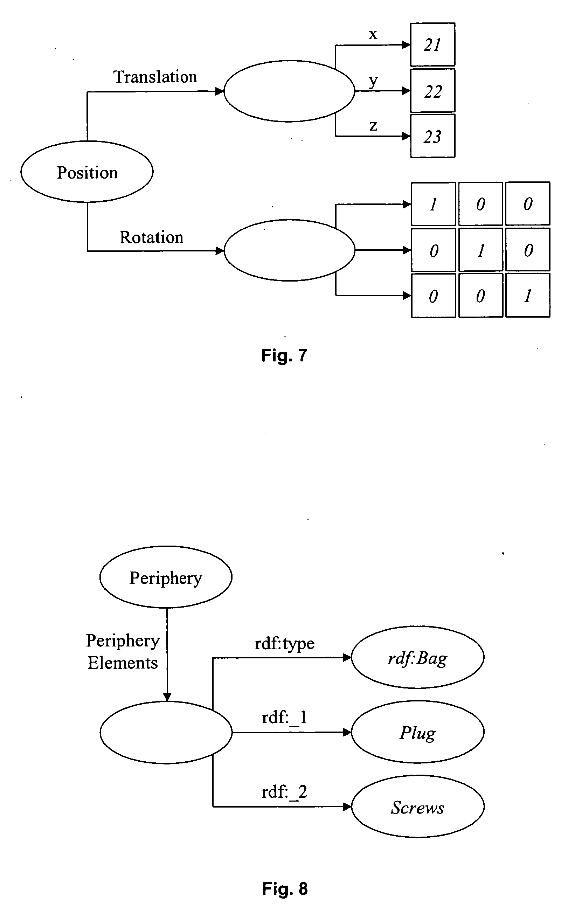

Fig. 7 shows metadata concerning a position. The location information stored in the field "Position" is only needed, if the location and the rotation specification of the geometry is not included in the model file itself. This usually occurs, when a component or periphery is used in a product several times (especially standard components). These components are engineered once and placed at their final positions by the constructing engineer each time they are used. In such a case the CAD model itself does not include any useful location information.

The periphery includes all parts, which are connected to the component. Therefore these parts have to be removed in order to dismantle the component itself. A component can have several periphery elements like plugs, hoses, screws, nuts and clips. In the present example the shown servomotor is fastened by four screws and is connected to a plug. In RDF a "Bag" identifies a collection of coequal entities. Therefore, metadata of a component typically comprises pointers, i. e. links, to other components and/or pointers to the metadata of other components.

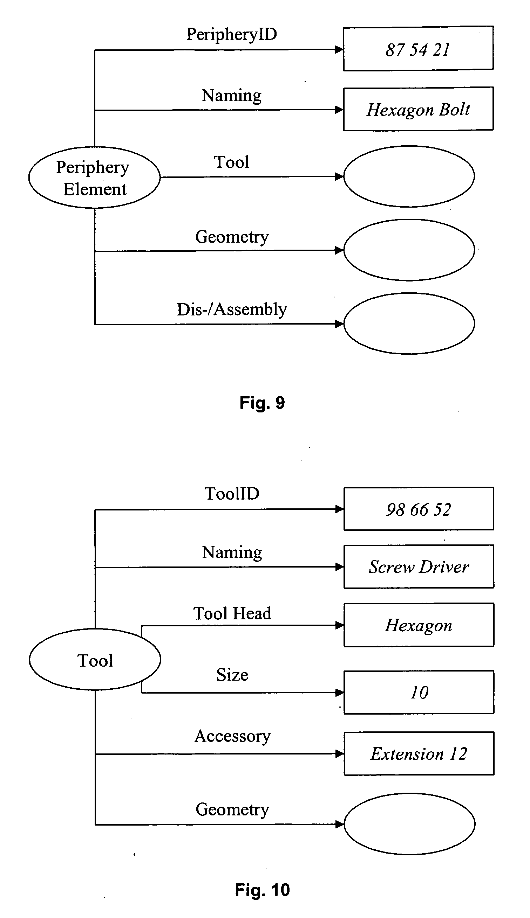

Fig. 8 shows metadata concerning a periphery. Fig. 9 shows metadata concerning a periphery element. As far as possible, the metadata of a periphery element is similar to the metadata of a component. Additionally, every periphery element is assigned information about the tool, which is necessary to loosen this element. Fig. 10 shows metadata concerning a tool assigned to a periphery element. For the shown hexagon bolt a compatible screwdriver is required. Further information on the tool can be extended with any technical values that describe the tool and its accessory depending on the use case.

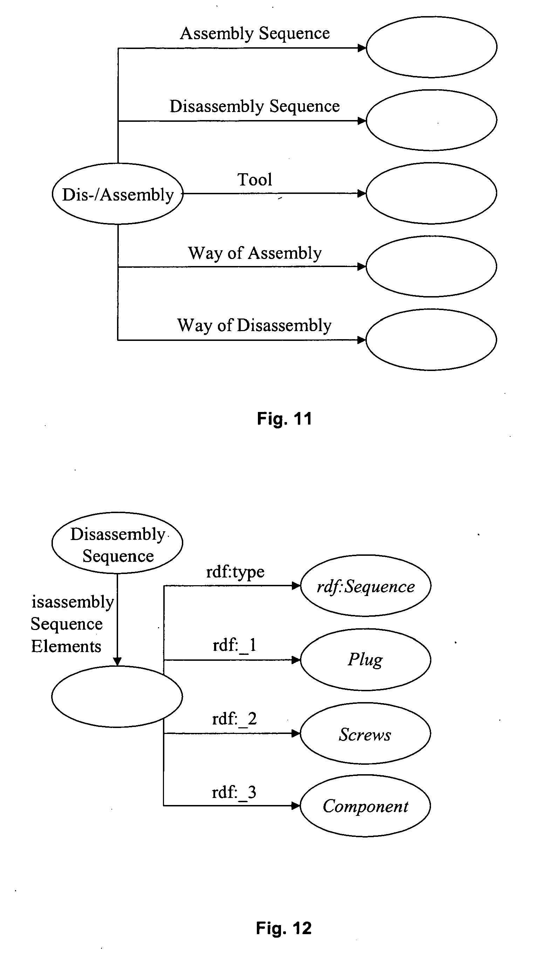

An important metadata category for repair manuals is the information concerning the disassembly und assembly procedure. This information is used to generate the repair process or the mounting guidelines for accessories. Fig. 11 shows metadata concerning the dis-/assembly of a component, i. e. the two available manipulation modes.

The sequence field in Fig. 11 is used to define the sub-steps a technician has to carry out (e.g. plug - screws - component itself) in order to manipulate the component in a desired manipulation mode (assembly or disassembly). Via RDF this information can be created with a container, which specifies that the execution order is definite.

Fig. 12 shows metadata concerning a disassembly sequence. The way of dis-/assembly specifies how to remove a part. For instance a component has to be rotated, dragged or the like in order to remove it. In some cases, a tool is required to remove a component (e.g. a wrench for oil filter cartridges). Furthermore, the dis-/assembly can consist of several sub-steps, which have to be executed in a predefined order. Due to this predefined order this information is modeled as a sequence.

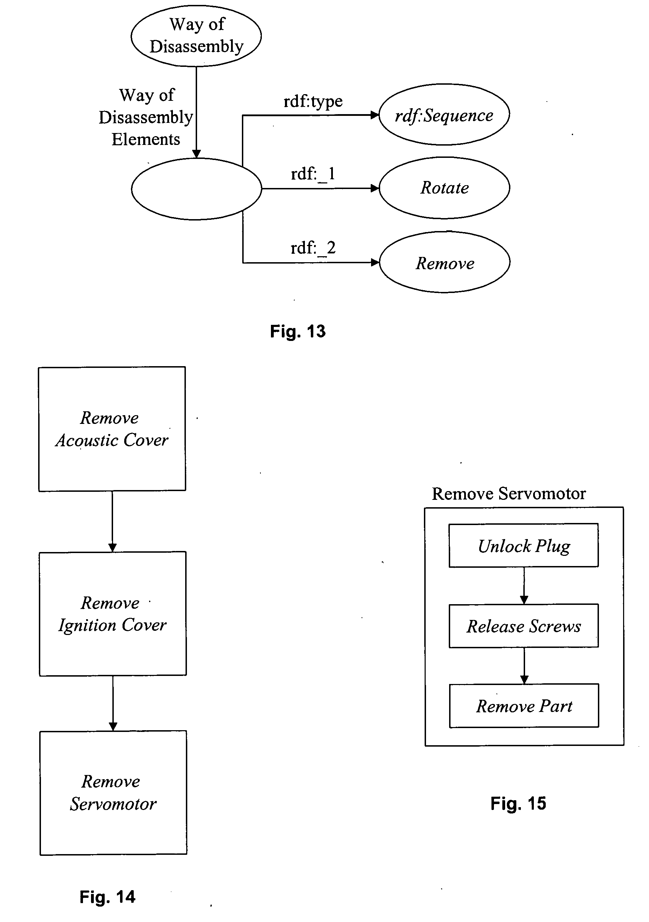

Fig. 13 shows metadata concerning a way of disassembly. In the present example the sequence of disassembly, the tool, and the way of disassembly describe the manipulation mode "disassembly".

The amount of metadata in the present example is not yet utilized. For every specific requirement these graphs can be continued. The above example is customized for the creation of a repair instruction, which is described below. In order to also generate operating manuals, further information on the individual components, particularly comprising functional information and operating issues, would have to be included.

Based on the metadata according to Figures 5 to 13, a sample repair manual is generated. Replacing the servomotor for the left eccentric shaft is a short-time repair, but it is sufficient to show a metadata based authoring method according to the present invention. The repair method consists of six steps. In the first and second step two covers have to be removed. In the third step the servomotor itself is dismantled. The installing of these three components takes also three steps in inverse order. The sub-steps of the third step are already known from Fig. 1. The servomotor is fastened by four screws and connected with a plug.

An authoring environment for technical documentation (as introduced in Knoepfle, Ch., Weidenhausen, J., Chauvigné L., Stock, I. Template based Authoring for AR based Service Scenarios. In Proceedings of IEEE VR 2005, Mar. 2005, Bonn/ Germany, pp. 249-252*)* is assumed to be available to the technical author. In his workspace the author has access to a workflow creation tool, which meets the demands of an authoring tool for repair instructions. In the ideal case, this workflow creation tool is based on the Virtual Car. Thus, the author clicks directly on the component and chooses the action to be executed from a context menu. Typical actions during a repair process are removing and manipulating a component (e.g. the sunroof has to be put in a special position in order to reach a particular screw).

Fig. 14 shows the workflow that describes the repair steps for the exemplary manual. The author arranges the separate steps in the correct order. To every step the technical author assigns a component and a manipulation mode. In the present example, the acoustic cover, the ignition cover and the servomotor have to be removed. The motor is assumed to be defective and has to be replaced. Afterwards, the author indicates, that the mounting process is equivalent to the dismounting in reverse order. This causes the authoring tool to generate the mounting manual automatically.

This workflow consists of the sequence of steps the technician in the workshop has to carry out. Due to the fact that each of these steps is made up of sub-steps, i. e. atomic actions, the authoring tool has to strip down the workflow using the metadata above. It analyzes the individual steps and develops a workflow consisting of atomic actions only.

The acoustic cover, for instance, is fastened by four screws. Accordingly, the system creates one sub-step for the screws and one for the cover itself. The ignition cover has no periphery. Therefore it can be dismounted directly. The servomotor is assigned metadata shown in Figures 5 to 13. First the plug is to be unlocked, then the screws to be released. Both for the plug and the screws, a separate table of "Dis-/Assembly" exists where further information is stored. Finally, the servomotor itself can be removed.

Fig. 15 shows the partial stages, i. e. atomic actions, of the third repair step.

In oder to achieve this result, the computer system reads out the field "Sequence of Disassembly". In this case the sequence "Plug ― Screws ― Part" is prescribed. After the periphery has been disassembled, the servomotor can be dismounted. The way of disassembly contains the information, that the servomotor has to be rotated until it is no longer engaged in the spline teeth.

If the technical author wants to visualize this operation, the geometry metadata is used to find the correct CAD model. For an automatic generation of the motion of the servomotor during the dismounting process the use of templates is recommended (as shown in Knoepfle, Ch., Weidenhausen, J., Chauvigné L., Stock, I. Template based Authoring for AR based Service Scenarios. In Proceedings of IEEE VR 2005, Mar. 2005, Bonn/ Germany, pp. 249-252*).* These templates have to be completed with application specific parameters that also could be stored as metadata nearby the geometry. In this case a template rotating and lifting the component would be suitable.

There are different possibilities to record metadata systematically. A preferred method is the predefined classification with specified metadata. Every component then is assigned to one of these predefined classes by the responsible constructing engineer or the technical author. The exacter the assignment could be carried out, the fewer metadata has to be integrated by hand. So an economically justifiable recordation of metadata is realizable.

Particularly with regard to repair manuals in the automotive industry, the level of reuse of a built workflow is very high. A medium-sized car as well as one of the luxury class can be covered by the same basic workflow. This workflow has to be adapted by the technical author for the particular vehicle type. Thus, there is only a small effort required for the creation of new documentation for a new car.

Further benefits of metadata based authoring method according to the present invention are the reuse of information, the supervised quality assurance by the computer and the automatic generation of partial stages as well as recurring steps.

## Claims

1. A method of generating a graphical manual for the manipulation of at least one component contained in a device,
**characterized in that**
a plurality of components are each assigned metadata containing
- manipulation data containing information which is necessary for a manipulation of the component in at least one manipulation mode and
- visualization data containing information which is necessary for a visualization of the component in a plurality of positions,
**in that** for a desired manipulation mode of an individual component a motion sequence of at least the individual component is generated from the manipulation data
and **in that** the generated motion sequence is visualized based on the visualization data.

2. A method according to claim 1, **characterized in that**
the manipulation data of a component contains information on periphery elements which have to be manipulated in order to manipulate the component as well as information on the manipulation mode in which the periphery elements have to be manipulated.

3. A method according to claim 1 or 2, **characterized in that**
the manipulation data of a component contains information on at least one tool which is necessary to manipulate the component.

4. A method according to any of claims 1 to 3, **characterized in that**
the device is a vehicle.
